# EUROPEAN PATENT SPECIFICATION

(11) **EP 2 796 417 B1**
(45) Date of publication and mention of the grant of the patent: **10.08.2016**
(21) Application number: 13165527.6
(22) Date of filing: 26.04.2013
(51) Int. Cl.: C02F 3/04, C02F 103/00

(54) **Arrangement for on-site treatment of household greywater effluent**
Vor-Ort-Vorrichtung zur Behandlung von Grauwasser
Dispositif pour le traitement sur site des eaux grises domestiques

(43) Date of publication of application: 29.10.2014
(73) Proprietor: Uponor Infra Oy, 01510 Vantaa (FI)
(72) Inventor: Tast, Niila, 15270 Hollola (FI); Päivinen, Niko, 15210 Lahti (FI)
(74) Representative: Papula Oy

(56) References cited:
- EP-A1- 1 712 526
- WO-A2-2004/026438
- CA-A1- 2 149 202

## Description

Arrangement for on-site treatment of household greywater effluent

### FIELD OF THE INVENTION

The present invention relates to a greywater treatment arrangement for on-site household greywater effluent treatment.

### BACKGROUND OF THE INVENTION

By the term "greywater" is meant wastewater which is generated from domestic activities such as laundry, dishwashing, and bathing. Greywater differs from water from the toilets which is designated "sewage" or "blackwater" to indicate it contains human waste.

Houses and properties which are not connected to the municipal waste sewer network, i.e. primarily holiday homes as well as houses in the countryside typically have employed a household greywater treatment system in which the greywater effluent is first lead by gravity or by pumping to a septic tank. In the septic tank the greywater effluent is clarified to separate at least a substantial part of the solids so that sludge is allowed to settle and the clarified greywater effluent is separated above the sludge layer so that it can be lead to a subsequent treatment. This treatment is in most cases a traditional infiltration field, which is also called as a leachfield or as a drain field. The infiltration field is normally realized by embedding perforated conduits in an existing or constructed layer of gravel or soil to allow the grey-water effluent to be distributed and infiltrated into the soil.

The traditional soil infiltration treatment method requires soil properties that permit infiltration. If the soil on site is not suitable for the infiltration, it has to be changed to proper filter sand. If the soil is not absorptive, it is possible that the filtered greywater has to be collected again by collecting tubes installed in the sand filter bed under the distribution tubes and further discharged from the collecting tubes. The infiltration field requires a large infiltration surface whereby a large area of the site must be reserved for the infiltration field. The infiltration field requires a large vertical separation between groundwater level. In the areas having high groundwater level the infiltration cannot be utilized at all. Also on rocky sites it is not possible to use the soil infiltration. The filter material of the infiltration field must be renewed every 20 to 30 years requiring excavation work. Further, the quality of the cleaning process in the soil infiltration field cannot be easily monitored.

### OBJECTIVE OF THE INVENTION

The objective of the invention is to eliminate the disadvantages mentioned above.

### SUMMARY OF THE INVENTION

The present invention provides a greywater treatment arrangement for on-site household greywater effluent treatment according to claim 1.

In one embodiment the filtering process in the peat material bed is implemented under aerobic conditions.

In one embodiment the filtering process in the peat material bed is enhanced by adding one or more additives to enhance removal of impurities.

In one embodiment the filtering process in the peat material bed is enhanced by adding one or more additives to enhance phosphorus and/or nitrogen removal.

In one embodiment one or more additives are mixed to the peat material bed.

In one embodiment one or more additives are arranged as a layer on the peat material bed, and/or inside the peat material bed, and/or under the peat material bed.

In one embodiment the additive is selected from the group comprising: ferric hydroxide (Fe(OH₃)), ferric sulphate Fe₂(SO₄)₃, ferrous hydroxide (Fe(OH)₂), ferrous sulphate (FeSO₄), iron gypsum (Fe(OH)₃ + CaSO₄*₂H₂O), steelmaking slag, aluminum hydroxide(Al(OH)₃), aluminum sulphate (Al₂(SO₄)₃), limestone (CaCO₃), burnt lime (CaO), slaked lime (Ca(OH)₂), half-burned dolomite (CaCO₃*MgO).

In one embodiment the greywater effluent is distributed substantially evenly on the area of the upper surface of the peat material bed.

In one embodiment the filtered greywater effluent, which has passed the peat material bed, is lead to soil, to a rock bed or to a ditch.
In one embodiment of the greywater treatment arrangement, the container comprises a side wall, a top wall and a bottom wall which define the inner space.
In one embodiment of the greywater treatment arrangement, the container comprises a hatch opening arranged in the top, and a lid to cover the hatch opening.

In one embodiment of the greywater treatment arrangement, the filtering apparatus comprises at least one ventilation pipe for providing aerobic conditions and ventilation to beneath the peat material bed and/or on top of the peat material bed.

In one embodiment of the greywater treatment arrangement, the filtering apparatus comprises an overflow pipe to provide a by-pass for an excess amount of effluent.

In one embodiment of the greywater treatment arrangement, the filtering apparatus comprises a ventilation and overflow pipe comprising a vertical tube having an upper end extending outside of the container, and a lower end inside the container below the filter media, the vertical tube having an overflow opening at a location above the peat material bed.

In one embodiment of the greywater treatment arrangement, the filtering apparatus comprises a collecting space located below the peat material bed to receive the effluent flown through the peat material bed. The collecting space beneath the peat material bed may be a free space or it may filled with suitable material.

In one embodiment of the greywater treatment arrangement, the filtering apparatus comprises a collecting pipe located in the collecting space and having a plurality of orifices, the collecting pipe being disposed on the bottom of the container below the peat material bed to collect and receive the filtered and purified greywater effluent, said collecting pipe having a first end connected to the second outlet.

In one embodiment of the greywater treatment arrangement, the collecting pipe has a second end connected to the lower end of the vertical tube.

In one embodiment of the greywater treatment arrangement, the filtering apparatus comprises a layer of collecting material disposed on the bottom of the container in the collecting space.

In one embodiment of the greywater treatment arrangement, the distribution device comprises a distribution tray arrangement which is arranged inside the container above the peat material bed, said distribution tray arrangement comprising a plurality of chutes, each chute having a bottom and one or more holes arranged on the bottom.

In one embodiment of the greywater treatment arrangement, the distribution device comprises a distribution channel connected to the second inlet to receive the greywater effluent to be filtered, the distribution channel extending above the distribution tray arrangement, the distribution channel having delivery openings at the lower part of the distribution channel to deliver effluent to the chutes.

In one embodiment of the greywater treatment arrangement, the chutes are parallel in relation to each other.

In one embodiment of the greywater treatment arrangement, the distribution channel extends above the distribution tray arrangement in a substantially crosswise direction in relation to the direction of the chutes.

In one embodiment of the greywater treatment arrangement, each delivery opening is located above a chute to deliver effluent to the chute.

In one embodiment of the greywater treatment arrangement, the distribution tray arrangement is supported to the container by first fixing members, one of more of the first fixing members having a height adjusting mechanism for the adjustment of the leveling of the distribution tray arrangement.

In one embodiment of the greywater treatment arrangement, the distribution channel is supported to the container by a second fixing member having a height adjusting mechanism to adjust the angle of inclination of the distribution channel.

In one embodiment of the greywater treatment arrangement, the bottom of each chute comprises a lower bottom part having first holes, and a higher bottom part having second holes located at an elevated level in relation to the level of the one or more first holes. This enables that in the event of a low effluent flow the effluent may be distributed on the peat material bed only through the first holes. In the event of a high effluent flow the effluent may be distributed on the peat material bed through the first holes and the second holes. In the event of clogging of the first holes the effluent may still be distributed on the peat material bed through the second holes.

In one embodiment of the greywater treatment arrangement, the first holes and the second holes in each chute are spaced at a distance from each other, so that the effluent is distributed to different areas of the peat material bed through the first holes in relation to the areas where the effluent is distributed through the second holes.

In one embodiment of the greywater treatment arrangement, the distribution tray arrangement has parallel chutes and a symmetry axis extending perpendicularly in relation to the direction of the chutes.

In one embodiment of the greywater treatment arrangement, the first holes in each pair of parallel chutes, which are next to each other, are spaced at a distance from each other at different sides in relation to the symmetry axis.

In one embodiment of the greywater treatment arrangement, the second holes in each pair of parallel chutes which are next to each other are spaced at a distance from each other at different sides in relation to the symmetry axis.

In one embodiment of the greywater treatment arrangement, the peat material bed comprises one or more additives to enhance removal of impurities.

In one embodiment of the greywater treatment arrangement, the peat material bed comprises one or more additives to enhance phosphorus and/or nitrogen removal.

In one embodiment of the greywater treatment arrangement, one or more additives are mixed to the peat material bed.

In one embodiment of the greywater treatment arrangement, the peat material bed comprises a layer of oen or more additives on the peat material bed, and/or a layer of one or more additives inside the peat material bed, and/or a layer of one or more additives under the peat material bed.

In one embodiment of the greywater treatment arrangement, the additive is selected from the group comprising: ferric hydroxide (Fe(OH₃)), ferric sulphate Fe₂(SO₄)₃, ferrous hydroxide (Fe(OH)₂), ferrous sulphate (FeSO₄), iron gypsum (Fe(OH)₃ + CaSO₄*₂H₂O), steelmaking slag, aluminum hydroxide(Al(OH)₃), aluminum sulphate (Al₂(SO₄)₃), limestone (CaCO₃), burnt lime (CaO), slaked lime (Ca(OH)₂), half-burned dolomite (CaCO₃*MgO).

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
Figure 1 is a schematic side view of a greywater treatment arrangement according to the invention,
Figure 2 is a schematic cross-sectional side view of the filtering apparatus of one embodiment of the greywater treatment arrangement according to the invention,
Figure 3 is an axonometric view of the distribution device of one embodiment of the greywater treatment arrangement according to the invention,
Figure 4 is an axonometric view of a part of the distribution tray arrangement of the embodiment shown in Figure 3,
Figure 5 is a plan view of the distribution tray arrangement of Figure 3 illustrating the distribution of effluent through the first holes, and
Figure 6 shows a distribution tray arrangement of Figure 5 illustrating the distribution of effluent through the first and the second holes.

### DETAILED DESCRIPTION OF THE INVENTION

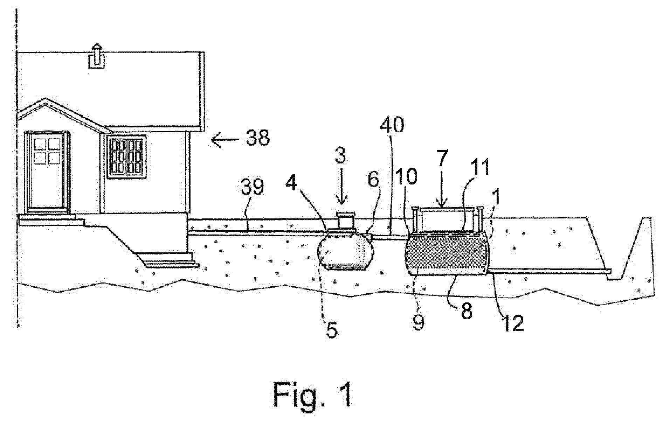

Figure 1 shows a greywater treatment arrangement for on-site household greywater effluent treatment. The arrangement comprises a septic tank 3 and a subsequent filtering apparatus 7. The septic tank 3 and the filtering apparatus 7 are both installed partially below ground level. Both the septic tank 3 and the filtering apparatus 7 are factory-built units. In the septic tank 3 the greywater effluent is first clarified to separate at least a substantial part of the solids from the liquid effluent, and thereafter the clarified greywater effluent is filtered in the filtering apparatus 7 through a peat material bed 1 to purify the greywater effluent biologically, physically and/or chemically.

The filtering apparatus 7 is a single compact unit which replaces the traditional soil infiltration field. In the filtering apparatus 7 a peat material bed 1 is the filtering medium. The filtering apparatus 7 requires only a small footprint area in the site and the excavation work required for its installation is small. The greywater treatment arrangement suits for all sites and is not dependent on soil conditions. The peat of the peat material bed 1 can be easily changed every 5 to 10 years with a sludge truck. The removed peat filter material can be used as a soil conditioner and thus enables nutrient recycling.

The septic tank 3 comprises a first inlet 4 which receives the greywater from the household 38 via a first pipeline 39. The greywater effluent can flow by gravity or assisted by pumping (not shown). The septic tank 3 also encloses an inner space 5 wherein a substantial part of solids are separated from the liquid greywater effluent by sedimentation. The solid organic waste settles to the bottom of the inner space 5 forming a sludge layer. The greywater effluent forms a layer of clarified effluent above the sludge layer and can be lead for further treatment via a first outlet 6. The clarifying step in the septic tank 3 is important because it reduces the load in the subsequent treatment step. The volume of the septic tank 3 is chosen so that the greywater effluent has a sufficient retention time needed for settling.

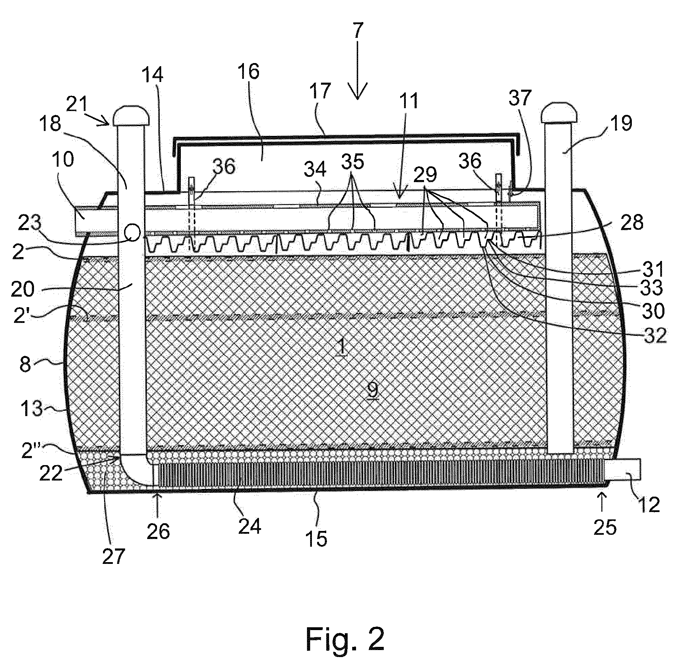

As shown in Figures 1 and 2, the greywater treatment arrangement includes a filtering apparatus 7. The filtering apparatus 7 comprises a container 8 having a second inner space 9. Peat material bed 1 is disposed in the second inner space 9 to form a filter medium through which the greywater effluent can flow by gravity. A second inlet 10 is arranged at the upper part of the container to receive the greywater effluent to be filtered via a second pipeline 40 from the first outlet 6 of the septic tank 3.

The filtering apparatus 7 comprises distribution device 11 which is arranged at the upper part of the container 8 to receive the greywater effluent from the second inlet 10. The distribution device 11 is arranged to distribute the greywater effluent substantially evenly on the area of the upper surface of the peat material bed 1. A second outlet 12 is arranged at the lower part of the container below the peat material bed 1 for discharging of the filtered and purified greywater effluent which has flown through the peat material bed 1.

The container 8 comprises a side wall 13, a top wall 14 and a bottom wall 15 which define the inner space 9. The container 8 comprises a hatch opening 16 arranged in the top 14. A lid 17 covers the hatch opening 16. When the lid 17 is opened the hatch opening 16 allows access to the inner space 9 of the container 8 so that it enables easy unloading and loading of the peat material during maintenance. The hatch opening 16 enables monitoring the operation of the distribution device 11 and accessing for its maintenance.

The filtering apparatus 7 further comprises at least one ventilation pipe 18, 19 for providing aerobic conditions and ventilation to beneath the peat material bed 1 and/or on top of the peat material bed 1.

The filtering apparatus 7 further comprises a combined ventilation and overflow pipe 18. The ventilation and overflow pipe 18 comprises a vertical tube 20 the upper end 21 of which extends outside of the container 8. The lower end 22 of the vertical tube 20 is located inside the container 8 below the peat material bed 1. The vertical tube also has an overflow opening 23 at a location above the peat material bed 1. Therefore pipe 18 also provides a by-pass for an excess amount of effluent. If the amount of the greywater effluent coming via the inlet 10 to the filtering apparatus 7 momentarily exceeds the filtering capacity of the peat material bed 1 the excess effluent is allowed to pass the peat material bed 1 and flow through the overflow opening 23 to the vertical tube 20 and further to the outlet 12.

The overflow opening 23 also serves the ventilation of the upper side of the peat material bed 1.

Further, the filtering apparatus 7 comprises a collecting pipe 24. The collecting pipe 24 is a perforated pipe thus having a plurality of orifices. The collecting pipe 24 may be a made of a conventional drainage pipe. The collecting pipe 24 is disposed on the bottom 15 of the container below the peat material bed 1 to collect and receive the filtered and purified greywater effluent which flows through the lower surface of the peat material bed 1. The collecting pipe 24 has first end 25 and a second end 26. The first end 25 is connected to or forms the second outlet 12. The second end 26 of the collecting pipe 24 may be connected to the lower end 22 of the vertical tube 20 so that ventilation air may be distributed by the collecting pipe 24 to the underside of the peat material bed 1. In some other not-shown embodiment the collecting pipe 24 may be separate and not connected to the vertical tube 20.

As shown in Figure 2, a layer of collecting material 27 can be disposed on the bottom 15 of the container 8. The collecting material 27 also forms a support on which the peat material bed 1 is lying. The collecting material may consist of e.g. gravel and/or aggregate. In some other not-shown embodiment the support function is achieved by a support member, such as a net etc., on which the peat material may lie at a height above the bottom 15 of the container. If a support member, such as a net is used, then the collecting space beneath the support member may be left as a free space without containing any collecting material and/or collecting pipe.

Referring to Figures 2 to 4, the distribution device 11 comprises a distribution tray arrangement 28. The distribution tray arrangement 28 is arranged inside the container 8 above the peat material bed 1. The distribution tray arrangement comprises a plurality of chutes 29. Each chute has a bottom 30, 31 and holes 32, 33 arranged on the bottom 30, 31. The distribution device 11 also comprises a distribution channel 34 which is connected to the second inlet 10 to receive the greywater effluent to be filtered. In the shown embodiment distribution channel 34 comprises a pipe. In some other embodiment the distribution channel 34 may be a chute. The distribution channel 34 extends above the distribution tray arrangement 28. The distribution channel 34 has delivery openings 35 at the lower part of the distribution channel 34 to deliver effluent to the chutes 29. Each delivery opening 35 is located above a chute 29 to deliver effluent to the chute 29.

The chutes 29 are parallel in relation to each other. The distribution channel 34 extends above the distribution tray arrangement 28 in a substantially crosswise direction in relation to the direction of the chutes 29.

As best shown in Figure 2, the distribution tray arrangement 28 is supported to the container 8 by first fixing members 36. One of more of the first fixing members 36 has a height adjusting mechanism for the adjustment of the levelling of the distribution tray arrangement. The distribution channel 34 is supported to the container 8 by a second fixing member 37 which also has a height adjusting mechanism to adjust the angle of inclination of the distribution channel 34.

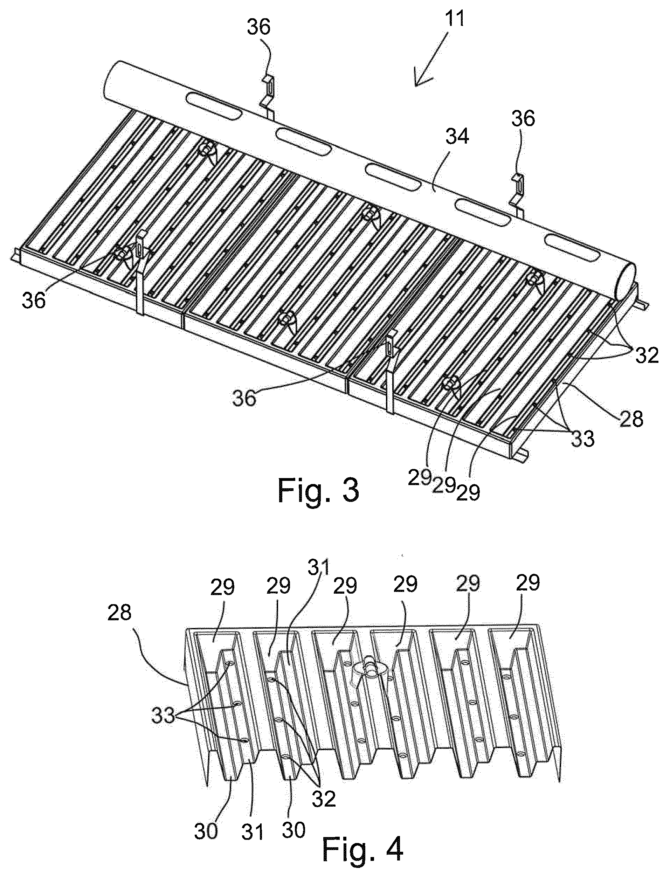

As shown in the cross-sectional view of Figure 4, the bottom of each chute 29 of the distribution tray arrangement 28 comprises a lower bottom part 30 having a first holes 32 and a higher bottom part 31 having second holes 33 located at an elevated level in relation to the level of the first holes 32.

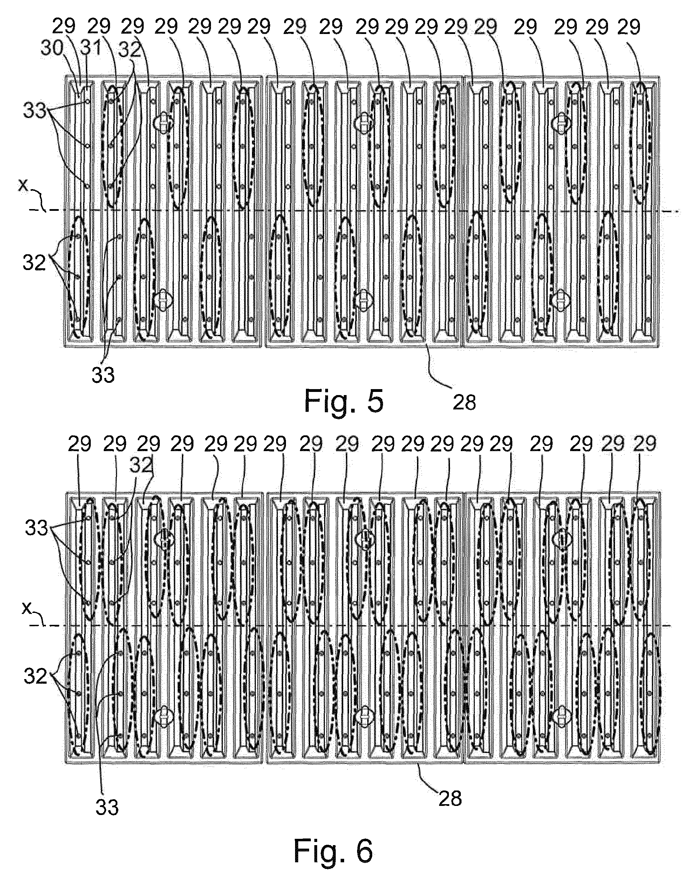

Referring to Figures 5 and 6, the first holes 32 and the second holes 33 in each chute 29 are spaced at a distance from each other. The effluent is distributed to different areas of the peat material bed 1 through the first holes 32 in relation to the areas where the effluent is distributed through the second holes 33.

The distribution tray arrangement 28 may have parallel chutes 29. The symmetry axis x of the distribution tray arrangement 28 extends perpendicularly in relation to the direction of the chutes 29. The first holes 32 in each pair of parallel chutes 29, which are next to each other, are spaced at a distance from each other at different sides in relation to the symmetry axis x. The second holes 32 in each pair of parallel chutes 29, which are next to each other, are spaced at a distance from each other at different sides in relation to the symmetry axis x. This enables an even effluent flow distribution on the peat material bed 1.

As shown in Figure 5, in the event of a low effluent flow the effluent may be distributed on the peat material bed 1 only through the first holes 32. The first holes 32 through which the effluent flows in that situation are encircled with ovals drawn with a dot-and-dash line.

As shown in Figure 6, in the event of a high effluent flow the effluent may be distributed on the peat material bed through both the first holes 32 and the second holes 33. The first holes 32 and the second holes 33 through which the effluent flows in that situation are encircled with ovals drawn with a dot-and-dash line.

Naturally, also in the event of clogging of the first holes 32 the effluent may still be distributed on the peat material bed 1 through the second holes 33.
The peat material bed 1 may comprise additives to enhance removal of impurities. The peat material bed 1 may comprise additives to enhance phosphorus and/or nitrogen removal. The additives may be mixed to the peat material bed 1. Figure 2 illustrates that the peat material bed 1 may comprise a layer 2 of the additives on the peat material bed, and/or a layer 2' of the additives inside the peat material bed, and/or a layer 2" of the additives under the peat material bed. For nitrogen removal a product named Envistone (manufacturer Envitop Oy, Finland) may be used. Phosphorus removal can be enhanced by selecting one or more additives from the group comprising ferric hydroxide (Fe(OH₃)), ferric sulphate Fe₂(SO₄)₃, ferrous hydroxide (Fe(OH)₂), ferrous sulphate (FeSO₄), iron gypsum (Fe(OH)₃ + CaSO₄*2H₂O), steelmaking slag, aluminum hydroxide (Al(OH)₃), aluminum sulphate (Al₂(SO₄)₃), limestone (CaCO₃), burnt lime (CaO), slaked lime (Ca(OH)₂), half-burned dolomite (CaCO₃*MgO).

## Claims

1. A greywater treatment arrangement for on-site household greywater effluent treatment, the arrangement comprising:
- a septic tank (3), comprising a first inlet (4) to receive the greywater from the household, an inner space (5) to separate a substantial part of solids from the liquid greywater effluent by sedimentation for clarifying the greywater effluent to be treated, and a first outlet (6) to discharge the clarified greywater effluent, and
- a filtering apparatus (7) comprising a container (8) having a second inner space (9), a peat material bed (1) disposed in the second inner space to form a filter medium through which the greywater effluent can flow by gravity, a second inlet (10) at the upper part of the container to receive the greywater effluent to be filtered from the first outlet (6) of the septic tank (3), a distribution device (11) which is arranged at the upper part of the container to receive the greywater effluent from the second inlet (10), said distribution device being arranged to distribute the greywater effluent substantially evenly on the area of the upper surface of the peat material bed (1), and a second outlet (12) at the lower part of the container below the peat material bed for discharging of the filtered and purified greywater effluent flown through the peat material bed, wherein the distribution device (11) comprises a distribution tray arrangement (28) which is arranged inside the container (8) above the peat material bed (1), said distribution tray arrangement comprising a plurality of chutes (29), each chute having a bottom (30, 31) and one or more holes (32, 33) arranged on the bottom (30, 31), **characterized in that** the bottom of each chute (29) comprises a lower bottom part (30) having first holes (32), and a higher bottom part (31) having second holes (33) located at an elevated level in relation to the level of the first holes (32), so that in the event of a low effluent flow the effluent may be distributed on the peat material bed (1) only through the first holes (32), and in the event of a high effluent flow the effluent may be distributed on the peat material bed through the first holes (32) and the second holes (33), and in the event of clogging of the first holes (32) the effluent may be distributed on the peat material bed (1) through the second holes (33).

2. The greywater treatment arrangement according to claim 1, wherein the container (8) comprises a side wall (13), a top wall (14) and a bottom wall (15) which define the inner space (9).

3. The greywater treatment arrangement according to claim 2, wherein the container (8) comprises a hatch opening (16) arranged in the top (14), and a lid (17) to cover the hatch opening.

4. The greywater treatment arrangement according to any one of the claims 1 to 3, wherein the filtering apparatus (7) comprises at least one ventilation pipe (18, 19) for providing aerobic conditions and ventilation to beneath the peat material bed (1) and/or on top of the peat material bed (1).

5. The greywater treatment arrangement according to any one of the claims 1 to 3, wherein the filtering apparatus (7) comprises an overflow pipe (18) to provide a by-pass for an excess amount of effluent.

6. The greywater treatment arrangement according to claim 4 or 5, wherein the filtering apparatus (7) comprises a ventilation and overflow pipe (18) comprising a vertical tube (20) having an upper end (21) extending outside of the container (8), and a lower end (22) inside the container below the filter media, the vertical tube having an overflow opening (23) at a location above the peat material bed (1).

7. The greywater treatment arrangement according to any one of the claims 1 to 6, wherein the filtering apparatus (7) comprises a collecting pipe (24) having a plurality of orifices, the collecting pipe being disposed on the bottom (15) of the container below the peat material bed (1) to collect and receive the filtered and purified greywater effluent, said collecting pipe having a first end (25) connected to the second outlet (12).

8. The greywater treatment arrangement according to claim 7, wherein the collecting pipe (24) has a second end (26) connected to the lower end (22) of the vertical tube (20).

9. The greywater treatment arrangement according to any one of the claims 1 to 8, wherein the filtering apparatus (7) comprises a layer of collecting material (27) disposed on the bottom of the container.

10. The greywater treatment arrangement according to any one of the claims 1 to 9, wherein the distribution device (11) comprises a distribution channel (34) connected to the second inlet (10) to receive the greywater effluent to be filtered, the distribution channel (34) extending above the distribution tray arrangement (28), the distribution channel (34) having delivery openings (35) at the lower part of the distribution channel (34) to deliver effluent to the chutes (29).

11. The greywater treatment arrangement according to any one of the claims 1 to 10, wherein the chutes (29) are parallel in relation to each other.

12. The greywater treatment arrangement according to any one of the claims 1 to 11, wherein the distribution channel (34) extends above the distribution tray arrangement (28) in a substantially crosswise direction in relation to the direction of the chutes (29).

13. The greywater treatment arrangement according to any one of the claims 10 to 12, wherein each delivery
opening (35) is located above a chute (29) to deliver effluent to the chute (29).

14. The greywater treatment arrangement according to any one of the claims 1 to 13, wherein the distribution tray arrangement (28) is supported to the container (8) by first fixing members (36), one of more of the first fixing members having a height adjusting mechanism for the adjustment of the levelling of the distribution tray arrangement.

15. The greywater treatment arrangement according to any one of the claims 1 to 14, wherein the distribution channel (34) is supported to the container (8) by a second fixing member (37) having a height adjusting mechanism to adjust the angle of inclination of the distribution channel.

16. The greywater treatment arrangement according to any one of the claims 1 to 15, wherein the first holes (32) and the second holes (33) in each chute (29) are spaced at a distance from each other, so that the effluent is distributed to different areas of the peat material bed (1) through the first holes (32) in relation to the areas where the effluent is distributed through the second holes (33).

17. The greywater treatment arrangement according to claim 16, wherein the distribution tray arrangement (28) has parallel chutes (29) and a symmetry axis (x) extending perpendicularly in relation to the direction of the chutes (29).

18. The greywater treatment arrangement according to claim 17, wherein the first holes (32) in each pair of parallel chutes (29), which are next to each other, are spaced at a distance from each other at different sides in relation to the symmetry axis (x).

19. The greywater treatment arrangement according to claim 17 or 18, wherein the second holes (32) in each pair of parallel chutes (29) which are next to each other are spaced at a distance from each other at different sides in relation to the symmetry axis (x).

20. The greywater treatment arrangement according to any one of the claims 1 to 19, wherein the peat material bed (1) comprises one or more additives to enhance removal of impurities.

21. The greywater treatment arrangement according to claim 20, wherein the peat material bed (1) comprises one or more additives to enhance phosphorus and/or nitrogen removal.

22. The greywater treatment arrangement according to claim 20 or 21, wherein the one or more additives are mixed to the peat material bed (1).

23. The greywater treatment arrangement according to any one of the claims 20 to 22, wherein the peat material bed (1) comprises a layer (2) of one or more additives on the peat material bed, and/or a layer (2') of one or more additives inside the peat material bed, and/or a layer (2") of one or more additives under the peat material bed.

## Patentansprüche

1. Grauwasserbehandlungsvorrichtung für eine Vor-Ort-Haushaltsgrauwasser-Abwasserbehandlung, wobei die Anordnung umfasst:
- eine Klärgrube (3), umfassend einen ersten Einlass (4) zum Aufnehmen des Grauwassers aus dem Haushalt, einen inneren Raum (5) zum Abscheiden eines wesentlichen Teils der Feststoffe aus dem flüssigen Grauwasser-Abwasser durch Sedimentation zum Klären des zu behandelnden Grauwasser-Abwassers, einen ersten Auslass (6) zum Ablassen des geklärten Grauwasser-Abwassers und
- eine Filtervorrichtung (7), umfassend einen Behälter (8) mit einem zweiten inneren Raum (9), ein Torfmaterialbett (1), das in dem zweiten inneren Raum angeordnet ist, um ein Filtermedium zu bilden, durch welches das Grauwasser-Abwasser per Schwerkraft strömen kann, einen zweiten Einlass (10) am oberen Teil des Behälters zum Aufnehmen des zu filternden Grauwasser-Abwassers aus dem ersten Auslass (6) der Kläranlage (3), eine Verteilungsvorrichtung (11), die im oberen Teil des Behälters zum Aufnehmen des Grauwasser-Abwassers aus dem zweiten Einlass (10) angeordnet ist, wobei die Verteilungsvorrichtung zum im Wesentlichen gleichförmigen Verteilen des Grauwasser-Abwassers im Bereich der oberen Oberfläche des Torfmaterialbetts (1) angeordnet ist, und einen zweiten Auslass (12) im unteren Teil des Behälters unterhalb des Torfmaterialbetts zum Ablassen des gefilterten und gereinigten Grauwasser-Abwasser, das durch das Torfmaterialbett geströmt ist, wobei die Verteilungsvorrichtung (11) eine Verteilschalenanordnung (28) umfasst, die innerhalb des Behälters (8) über dem Torfmaterialbett (1) angeordnet ist, wobei die Verteilschalenanordnung mehrere Rinnen (29) umfasst, wobei jede Rinne eine Unterseite (30, 31) und eines oder mehrere Löcher (32, 33) aufweist, die an der Unterseite (30, 31) angeordnet sind,
**dadurch gekennzeichnet, dass** die Unterseite jeder Rinne (29) einen unteren Teil (30) mit ersten Löchern (32) und einen höheren unteren Teil (31) mit zweiten Löchern (33) umfasst, die in einer höheren Ebene bezüglich der Ebene der ersten Löcher (32) angeordnet sind, sodass im Fall einer geringen Abwasserströmung das Abwasser auf dem Torfmaterialbett (1) nur durch die ersten Löcher (32) verteilt wird,
und dadurch, dass im Fall einer hohen Abwasserströmung das Abwasser auf dem Torfmaterialbett durch die ersten Löcher (32) und die zweiten Löcher (33) verteilt wird, und dadurch, dass im Fall des Verstopfens der ersten Löcher (32) das Abwasser durch die zweiten Löcher (33) auf dem Torfmaterialbett (1) verteilt werden kann.

2. Grauwasserbehandlungsvorrichtung nach Anspruch 1, wobei der Behälter (8) eine Seitenwand (13), eine obere Wand (14) und eine untere Wand (15) umfasst, die den inneren Raum (9) definieren.

3. Grauwasserbehandlungsvorrichtung nach Anspruch 2, wobei der Behälter (8) eine Lukenöffnung (16), die in der Oberseite (14) angeordnet ist, und einen Deckel (17) zum Bedecken der Lukenöffnung umfasst.

4. Grauwasserbehandlungsvorrichtung nach einem der Ansprüche 1 bis 3, wobei die Filtervorrichtung (7) mindestens ein Entlüftungsrohr (18, 19) zur Bereitstellung aerober Bedingungen und eine Entlüftung unterhalb des Torfmaterialbetts (1) und/oder der Oberseite des Torfmaterialbetts (1) umfasst.

5. Grauwasserbehandlungsvorrichtung nach einem der Ansprüche 1 bis 3, wobei die Filtervorrichtung (7) ein Überlaufrohr (18) zum Bereitstellen einer Umgehung für eine überschüssige Abwassermenge umfasst.

6. Grauwasserbehandlungsvorrichtung nach Anspruch 4 oder 5, wobei die Filtervorrichtung (7) ein Entlüftungs- und Überlaufrohr (18) umfasst, das einen vertikalen Schlauch (20) mit einem oberen Ende (21) umfasst, das sich außerhalb des Behälters (8) erstreckt, und ein unteres Ende (22) innerhalb des Behälters unterhalb der Filtermedien, wobei der vertikale Schlauch eine Überlauföffnung (23) an einer Stelle oberhalb des Torfmaterialbetts (1) aufweist.

7. Grauwasserbehandlungsvorrichtung nach einem der Ansprüche 1 bis 6, wobei die Filtervorrichtung (7) ein Sammelrohr (24) mit mehreren Öffnungen aufweist, wobei das Sammelrohr an der Unterseite (15) des Behälters unterhalb des Torfmaterialbetts (1) zum Sammeln und Aufnehmen des gefilterten und gereinigten Grauwasser-Abwassers angeordnet ist, wobei das Sammelrohr ein erstes Ende (25) aufweist, das mit dem zweiten Auslass (12) verbunden ist.

8. Grauwasserbehandlungsvorrichtung nach Anspruch 7, wobei das Sammelrohr (24) ein zweites Ende (26) aufweist, das mit dem unteren Ende (22) des vertikalen Schlauchs (20) verbunden ist.

9. Grauwasserbehandlungsvorrichtung nach einem der Ansprüche 1 bis 8, wobei die Filtervorrichtung (7) eine Schicht aus Sammelmaterial (27) umfasst, die an der Unterseite des Behälters angeordnet ist.

10. Grauwasserbehandlungsvorrichtung nach einem der Ansprüche 1 bis 9, wobei die Verteilungsvorrichtung (11) einen Verteilungskanal (34) umfasst, der mit dem zweiten Einlass (10) zum Aufnehmen des zu filternden Grauwasser-Abwasser verbunden ist, wobei sich der Verteilungskanal (34) oberhalb der Verteilschalenanordnung (28) erstreckt, wobei der Verteilungskanal (34) Zuführöffnungen (35) im unteren Teil des Verteilungskanals (34) zum Zuführen von Abwasser zu den Rinnen (29) aufweist.

11. Grauwasserbehandlungsvorrichtung nach einem der Ansprüche 1 bis 10, wobei die Rinnen (29) parallel zueinander verlaufen.

12. Grauwasserbehandlungsvorrichtung nach einem der Ansprüche 1 bis 11, wobei sich der Verteilungskanal (34) über der Verteilschalenanordnung (28) in einer im Wesentlichen kreuzweisen Richtung in Bezug auf die Richtung der Rinnen (29) erstreckt.

13. Grauwasserbehandlungsvorrichtung nach einem der Ansprüche 10 bis 12, wobei jede Zuführöffnung (35) über einer Rinne (29) angeordnet ist, um der Rinne (29) Abwasser zuzuführen.

14. Grauwasserbehandlungsvorrichtung nach einem der Ansprüche 1 bis 13, wobei die Verteilschalenanordnung (28) an dem Behälter (8) über erste Befestigungselemente (36) abgestützt ist, wobei eines oder mehrere der ersten Befestigungselemente einen Höhenverstellmechanismus zum Einstellen der Nivellierung der Verteilschalenanordnung aufweisen.

15. Grauwasserbehandlungsvorrichtung nach einem der Ansprüche 1 bis 14, wobei der Verteilungskanal (34) an dem Behälter (8) über ein zweites Befestigungselement (37) abgestützt ist, das einen Höhenverstellmechanismus zum Einstellen des Neigungswinkels des Verteilungskanals aufweist.

16. Grauwasserbehandlungsvorrichtung nach einem der Ansprüche 1 bis 15, wobei die ersten Löcher (32) und die zweiten Löcher (33) in jede Rinne (29) in einem Abstand voneinander beabstandet sind, sodass das Abwasser zu verschiedenen Bereichen des Torfmaterialbetts (1) durch die ersten Löcher (32) in Bezug auf die Bereiche verteilt wird, in denen das Abwasser durch die zweiten Löcher (33) verteilt wird.

17. Grauwasserbehandlungsvorrichtung nach Anspruch 16, wobei die Verteilschalenanordnung (28) parallele Rinnen (29) und eine Symmetrieachse (x) aufweist, die sich senkrecht in Bezug auf die Richtung der Rinnen (29) erstreckt.

18. Grauwasserbehandlungsvorrichtung nach Anspruch 17, wobei die ersten Löcher (32) in jedem Paar von parallelen Rinnen (29), die nebeneinander liegen, in einem Abstand an unterschiedlichen Seiten in Bezug auf die Symmetrieachse (x) voneinander beabstandet sind.

19. Grauwasserbehandlungsvorrichtung nach Anspruch 17 oder 18, wobei die zweiten Löcher (32) in jedem Paar von parallelen Rinnen (29), die nebeneinander liegen, in einem Abstand an unterschiedlichen Seiten in Bezug auf die Symmetrieachse (x) voneinander beabstandet sind.

20. Grauwasserbehandlungsvorrichtung nach einem der Ansprüche 1 bis 19, wobei das Torfmaterialbett (1) einen oder mehrere Zusatzstoffe zum Entfernen von Verunreinigungen umfasst.

21. Grauwasserbehandlungsvorrichtung nach Anspruch 20, wobei das Torfmaterialbett (1) einen oder mehrere Zusatzstoffe zum Verbessern der Phosphor- und/oder Stickstoffentfernung umfasst.

22. Grauwasserbehandlungsvorrichtung nach Anspruch 20 oder 21, wobei der eine oder die mehreren Zusatzstoffe dem Torfmaterialbett (1) beigemischt werden.

23. Grauwasserbehandlungsvorrichtung nach einem der Ansprüche 20 bis 22, wobei das Torfmaterialbett (1) eine Schicht (2) aus einem oder mehreren Zusatzstoffen auf dem Torfmaterialbett und/oder eine Schicht (2') eines oder mehrerer Zusatzstoffe innerhalb des Torfmaterialbetts und/oder eine Schicht (2") aus einem oder mehreren Zusatzstoffen unter dem Torfmaterialbett umfasst.

## Revendications

1. Système de traitement des eaux usées permettant de traiter sur place des effluents d'eaux usées domestiques, le système comprenant :
- une fosse septique (3) qui comporte une première arrivée (4) pour recevoir les eaux usées du ménage, un volume intérieur (5) pour séparer une part essentielle de solides des effluents d'eaux usées liquides par sédimentation en vue d'une épuration des effluents d'eaux usées à traiter et une première sortie (6) pour évacuer les effluents d'eaux usées épurées et
un dispositif de filtrage (7) comportant un récipient (8) présentant un second volume intérieur (9), dans lequel est disposé un lit de tourbe (1) pour former un milieu filtrant, à travers lequel les effluents d'eaux usées peuvent s'écouler par gravité, une seconde arrivée (10), sur la partie supérieure du récipient, pour recevoir les effluents d'eaux usées à filtrer depuis la première sortie (6) de la fosse septique (3), un dispositif de distribution (11) disposé sur la partie supérieure du récipient et destiné à recevoir les effluents d'eaux usées depuis la seconde arrivée (10), ledit dispositif de distribution étant conçu pour distribuer les effluents d'eaux usées de façon essentiellement uniforme sur la zone de la surface supérieure du lit de tourbe (1), et une seconde sortie (12), sur la partie inférieure du récipient, au-dessous du lit de tourbe pour évacuer les effluents d'eaux usées filtrées et épurées qui se sont écoulées à travers le lit de tourbe, le dispositif de distribution (11) comprenant un système à plateau de distribution (28) qui est disposé à l'intérieur du récipient (8), au-dessus du lit de tourbe (1), ledit système à plateau de distribution (28) comportant une pluralité de puits (29), chaque puit ayant un fond (30, 31) et un ou plusieurs trous (32, 33) pratiqués dans le fond (30, 31), **caractérisé en ce que** le fond de chaque puits (29) comprend une partie inférieure (30) présentant des premiers trous (32) et une partie supérieure (31) présentant des seconds trous (33) situés à un niveau élevé par rapport à celui des premiers trous (32), de manière qu'à faible débit des effluents, ceux-ci puissent être distribués sur le lit de tourbe (1) à travers les premiers trous (32) seulement et qu'à fort débit des effluents, ceux-ci puissent être distribués sur le lit de tourbe à travers les premiers trous (32) et les seconds trous (33) et qu'en cas d'obstruction des premiers trous (32), les effluents puissent être distribués sur le lit de tourbe (1) à travers les seconds trous (33).

2. Système de traitement des eaux usées suivant la revendication 1, dans lequel le récipient (8) comprend une paroi latérale (13), une paroi supérieure (14) et une paroi inférieure (15) qui définissent le volume intérieur (9).

3. Système de traitement des eaux usées suivant la revendication 2, dans lequel le récipient (8) comprend une trappe (16) agencée dans la paroi supérieure (14) et un couvercle (17) pour couvrir la trappe.

4. Système de traitement des eaux usées suivant une quelconque des revendications 1 à 3, dans lequel le dispositif de filtrage (7) comprend au moins une conduite de ventilation (18, 19) pour générer des conditions aérobies et assurer une ventilation au-dessous et/ou au-dessous du lit de tourbe (1).

5. Système de traitement des eaux usées suivant une quelconque des revendications 1 à 3, dans lequel le dispositif de filtrage (7) comprend une conduite de trop plein (18) pour fournir une dérivation pour une quantité excessive d'effluents.

6. Système de traitement des eaux usées suivant la revendication 4 ou 5, dans lequel le dispositif de filtrage (7) comprend une conduite de ventilation et de trop plein (18) comportant un tube vertical (20) ayant une extrémité supérieure (21) qui s'étend hors du récipient (8) et une extrémité inférieure (22) à l'intérieur du récipient, au-dessous du milieu filtrant, le tube vertical ayant une ouverture de trop plein (23) à un emplacement situé au-dessus du lit de tourbe (1).

7. Système de traitement des eaux usées suivant une quelconque des revendications 1 à 6, dans lequel le dispositif de filtrage (7) comprend une conduite collectrice (24) ayant une pluralité d'orifices, la conduite collectrice étant disposée sur le fond (15) du récipient, au-dessous du lit de tourbe (1) pour collecter et recevoir les effluents d'eaux usées filtrées et épurées, ladite conduite collectrice ayant une première extrémité (25) reliée à la seconde sortie (12).

8. Système de traitement des eaux usées suivant la revendication 7, dans lequel la conduite collectrice (24) présente une seconde extrémité (26) qui est reliée à l'extrémité inférieure (22) du tube vertical (20).

9. Système de traitement des eaux usées suivant une quelconque des revendications 1 à 8, dans lequel le dispositif de filtrage (7) comprend une couche de matière collectrice (27) disposée sur le fond du récipient.

10. Système de traitement des eaux usées suivant une quelconque des revendications 1 à 9, dans lequel le dispositif de distribution (11) comprend un canal de distribution (34) qui est relié à la seconde entrée (10) pour recevoir les effluents d'eaux usées à filtrer, le canal de distribution (34) s'étendant au-dessus du plateau de distribution (28) et présentant, dans sa partie inférieure, des ouvertures de distribution pour évacuer des effluents vers les puits (29).

11. Système de traitement des eaux usées suivant une quelconque des revendications 1 à 10, dans lequel les puits (29) sont parallèles les uns aux autres.

12. Système de traitement des eaux usées suivant une quelconque des revendications 1 à 11, dans lequel, le canal de distribution (34) s'étend au-dessus du système à plateau de distribution (28) dans une direction essentiellement transversale aux puits (29).

13. Système de traitement des eaux usées suivant une quelconque des revendications 10 à 12, dans lequel chaque ouverture d'évacuation (35) est située au-dessus d'un puits (29) pour évacuer des effluents vers le puits (29).

14. Système de traitement des eaux usées suivant une quelconque des revendications 1 à 13, dans lequel le système à plateau de distribution (28) s'appuie sur le récipient (8) au moyen de premiers éléments de fixation (36), un parmi plusieurs premiers éléments de fixation étant muni d'un mécanisme de réglage de la hauteur pour l'ajustement du niveau du plateau de distribution.

15. Système de traitement des eaux usées suivant une quelconque des revendications 1 à 14, dans lequel le canal de distribution (34) s'appuie sur le récipient (8) au moyen d'un second élément de fixation (37) muni d'un mécanisme de réglage de hauteur pour l'ajustement de l'angle d'inclinaison du canal de distribution.

16. Système de traitement des eaux usées suivant une quelconque des revendications 1 à 15, dans lequel des premiers trous (32) et des seconds trous (33) dans chaque puit (29) sont espacés les uns des autres de manière que les effluents soient distribués à travers les premiers trous (32) dans des zones du lit de tourbe (1) qui sont différentes de celles, dans lesquelles les effluents sont distribués à travers les seconds trous (33).

17. Système de traitement des eaux usées suivant la revendication 16, dans lequel le système à plateau de distribution (28) possède des puits parallèles (29) et un axe de symétrie (x) s'étendant perpendiculairement par rapport à la direction des puits (29).

18. Système de traitement des eaux usées suivant la revendication 17, dans lequel les premiers trous (32) dans chaque paire de puits parallèles (29), situés à proximité l'un de l'autre, sont espacés les uns des autres respectivement sur des côtés différents par rapport à l'axe de symétrie (x).

19. Système de traitement des eaux usées suivant la revendication 17 ou 18, dans lequel les seconds trous (32) dans chaque paire de puits parallèles (29), situés à proximité l'un de l'autre, sont espacés les uns des autres respectivement sur des côtés différents par rapport à l'axe de symétrie (x).

20. Système de traitement des eaux usées suivant une quelconque des revendications 1 à 19, dans lequel le lit de tourbe (1) comprend un ou plusieurs additifs pour améliorer l'élimination d'impuretés.

21. Système de traitement des eaux usées suivant la revendication 20, dans lequel le lit de tourbe (1) comprend un ou plusieurs additifs pour améliorer l'élimination du phosphore et/ou de l'azote.

22. Système de traitement des eaux usées suivant la revendication 20 ou 21, dans lequel l'additif ou les plusieurs additifs sont mélangés au lit de tourbe (1).

23. Système de traitement des eaux usées suivant une quelconque des revendications 20 à 22, dans lequel le lit de tourbe (1) comprend une couche (2) d'un ou de plusieurs additifs disposée au-dessus du lit de tourbe (1) et/ou une couche (2') d'un ou de plusieurs additifs disposée à l'intérieur du lit de tourbe, et/ou une couche (2") d'un ou de plusieurs additifs disposée au-dessous du lit de tourbe.
